# EUROPEAN PATENT SPECIFICATION

(11) **EP 0 575 543 B1**
(45) Date of publication and mention of the grant of the patent: **23.04.1997**
(21) Application number: 92909234.4
(22) Date of filing: 11.02.1992
(51) Int. Cl.: C08J 9/14, C08L 75/00

(54) **FOAMING SYSTEM FOR RIGID URETHANE AND ISOCYANURATE FOAMS**
TREIBMITTELSYSTEM FÜR HARTE URETHAN- UND ISOCYANURATSCHÄUME
SYSTEME DE PREPARATION DE MOUSSES RIGIDES D'URETHANE ET D'ISOCYANURATE

(30) Priority: 08.03.1991 US 666825
(43) Date of publication of application: 29.12.1993
(73) Proprietor: THE DOW CHEMICAL COMPANY, Midland, Michigan 48640 (US)
(72) Inventor: SMITS, Guido, Freddy, B-2110 Wijnegem (BE); THOEN, Johan, A., NL-4535 HB Terneuzen (NL); GRÜNBAUER, Henri, J., M., NL-4501 HC Oostburg (NL); LIDY, Werner, A., NL-4535 BC Terneuzen (NL)
(74) Representative: Huber, Bernhard, Dipl.-Chem.
(86) International application number: PCT/US92/01098
(87) International publication number: WO 92/15639

(56) References cited:
- EP-A- 0 351 614
- EP-A- 0 398 147
- EP-A- 0 405 439

## Description

This invention relates to a foaming system containing a mixture of physical blowing agents and a process of preparing polyurethane or polyisocyanurate foam therewith.

Until recently, chlorofluoroalkane-based blowing agents (CFCs) such as CFC-11 (CCl₃F) have been the most desirable blowing agents for the preparation of isocyanate-based foams, such as rigid and flexible urethane and isocyanurate foams because of their many advantages including low thermal conductivity, poor or nonflammability of the blowing agent and good dimensional stability of the resulting foam. However, there may be an association of certain CFCs, including CFC-11, with the declining ozone concentrations from the earth's atmosphere. As a consequence, the use of certain CFCs is being restricted and thus alternative blowing agents are necessary for the preparation of foam.

As a first alternative, hydrogen-containing chlorofluoroalkanes (HCFCs) such as HCFC-123 (CHCl₂CF₃) and HCFC-141b (CH₂ClCHClF), which have relatively short life times in the atmosphere and essentially decompose before they reach earths' stratosphere containing the ozone, have been proposed. These alternative blowing agents however, frequently display poorer processing, higher thermal conductivity and often inferior dimensionally stabilities of the resulting foam especially when used in combination with "water" blowing.

The thermal insulation performance of a foam is dependent principally on the average thermal conductivity of the gas mixture contained within the cells and especially the cell size, enhanced performance is generally obtained with a smaller average cell size. To compensate for any increased average thermal conductivity of the gas that may be contained within the closed cells of the foam it is desirable to provide for a foam having a fine cell size.

In a recent European Patent publication, EP 351614, fine-celled polyurethane foam is prepared in the presence of a blowing agent which is a fluorinated hydrocarbon and/or hexafluorosulphur and being poorly soluble or insoluble in the foam precursor materials. An emulsifying agent, notably an oligomeric acrylate polyoxyalkylene substance containing fluoroalkane residues is taught as being necessary to provide for resulting foams which do not collapse. Use of similar insoluble substances as blowing agent to prepare polyurethane foams is also disclosed in patent publications U.S. Patent No. 4,981,879 and EP-405,439.

More particular, EP-A-0 405 439 discloses a process for preparing a closed-cell polyurethane polymer by reacting a polyisocyanate with a polyol in the presence of a non-polar practically insoluble substance such as fluorinated hydrocarbons or polyfluoroethers in the presence of water. Optionally, up to 50 vol.-% of the non-polar substance may be replaced with a polar blowing agent with exemplified polar blowing agents being di-chloro-trifluoro-ethane (R123, bp 300K) and dichlorofluoroethane (R141b, bp 305K). The blowing agents used are typically within a boiling point range of from 20°C to 60°C.

EP-A-0 398 147 discloses a process for preparing a rigid closed-cell polyisocyanate-based foam in the presence of a blowing agent comprising at least one halocarbon compound having a boiling point of at least 283K and at least one halocarbon compound having a boiling point less than or equal to 266K. The use of a blowing agent comprising a hydrocarbon component and a polyfluorocarbon component is not disclosed.

It has now been discovered that a foaming system comprising *as* physical blowing agent a ternary mixture may be used to prepare polyurethane or polyisocyanurate foam having a uniformly fine cell size.

In one aspect, this invention is a process for preparing a fine, closed-cell, polyisocyanate-based foam by reacting a polyisocyanate with an isocyanate-reactive material in the presence of water and a physical blowing agent which comprises:
(a) from 2 to 70 mole percent based on total moles of components (a) and (b) present, of a halocarbon substance, different from (b2), which has a boiling point of from 200K and up to 283K at 1.113 bar (760 mm Hg); and
(b) from 98 to 30 mole percent of a mixture which consists of
   (b1) a hydrocarbon component that contains four or more carbon atoms, and
   (b2) a polyfluorocarbon component which has a Kelvin boiling point of from 283K to 393K at 1.113 bar (760 mm Hg) and a ratio of Kelvin boiling point to molecular weight of less than or equal to 1.7 and wherein the mole ratio of (b1):(b2) is from 5 to 95:95 to 5.

In another aspect, this invention is a polyisocyanate-based foam, prepared according to the process of the first aspect, having an average density of from 10 to 100 Kg/M³, a mean cell diameter of 0.45 mm or less and within its cells a gas mixture which contains:
(i) from 5 to 90 mole percent, based on components (i) and (ii), of carbon dioxide; and
(ii) from 95 to 10 mole percent, based on components (i) and (ii), of component (ii) of a physical blowing agent that comprises:
   (a) from 2 to 70 mole percent based on total moles of components (a) and (b) present, of a halocarbon substance, different from (b2), which has a boiling point of from 200K and up to 283K at 1.113 bar (760 mm Hg); and
   (b) from 98 to 30 mole percent of a mixture which consists of
      (b1) a hydrocarbon component that contains four or more carbon atoms, and
      (b2) a polyfluorocarbon component which has a Kelvin boiling point of from 283K to 393K at 1.113 bar (760 mm Hg) and a ratio of Kelvin boiling point to molecular weight of less than or equal to 1.7 and wherein the mole ratio of (b1):(b2) is from 5 to 95:95 to 5.

In yet another aspect, this invention is a composition comprising a blend of an isocyanate--reactive material, water in an amount of from 2 to 10 parts per 100 parts by weight isocyanate-reactive material and a physical blowing agent in from 1 to 50 parts per 100 parts by weight isocyanate reactive material as described in the process of the first aspect.

Surprisingly, the use of such physical blowing agent is found to provide foam having an unexpectedly fine cell structure. The fine cell structure permits the manufacture of foam having a desirable thermal insulation performance especially in consideration of the thermal conductivity of the gas mixture contained within the cells. The individual thermal conductivities of carbon dioxide and hydrocarbons present in such amounts within a larger sized cell would not normally be considered suitable for conferring commercially desirable thermal insulation properties to the foam. The physical blowing agent containing components (a) and (b) is more fully described as follows.

Component (a) comprises a substance, different from component (b2), which has a boiling point of from 200K to 283K at 1.113 bar (760 mm Hg).

Component (b) of the pnysical blowing agent consists of a mixture of a hydrocarbon (b1) that contains four or more carbon atoms and a polyfluorocarbon (b2) which has a Kelvin boiling point of from 283K to 393K at 1.113 bar (760 mm Hg) and a boiling point to molecular weight ratio of less than or equal to 1.7 and wherein the mole ratio of (b1):(b2) is from 5 to 95:95 to 5. Preferably the hydrocarbon is present in an amount to provide a mole ratio of from 40, more preferably from 50, and up to 90, more preferably up to 80, most preferably up to 75, the balance being made up by component (b).

Component (a) of the blowing agent constitutes from 2 to 70 mole percent based on total moles of components (a) and (b). Preferably, component (a) constitutes from 5, more preferably from 10, and most preferably from 20, and up to 60, more preferably up to 55 and most preferably up to 40 mole percent of the mixture. The balance of the blowing agent mixture is made up by component (b) which constitutes from 98 to 30 mole percent based on total moles of components (a) and (b). Preferably, component (b) constitutes up to 95, more preferably up to 90, and most preferably up to 80. and from 40, more preferably from 45 and most preferably from 60 mole percent of the mixture. Generally, as the boiling point of the component (a) becomes lower it may be present in smaller amounts within the blowing agent mixture.

Component (a) is a halocarbon substance and especially chlorofluorocarbon, chlorocarbon and fluorocarbon compounds. The halocarbons are essentially gaseous at ambient conditions and have a Kelvin boiling point of from 200K to up to 283K, preferably from 220 to 283K and more preferably from 230K to 273K at 1.113 bar (760 mm Hg).

Use of such a component selected is advantageous where it is desired to obtain a foam with a particularly fine cell structure.

Examples of halocarbon compounds include tetrafluoroethane (247K; 2.42), chlorotetrafluoroethane (261K; 1.91), pentafluoroethane (225K; 1.87), chlorodifluoroethane (263K; 2.62), chlorotrifluoroethane (225K; 2.69), difluoroethane (248K; 3.76), chlorodifluoromethane (232K; 2.68), dichlorodifluoromethane (243K; 2.0), heptafluoropentane (256K; 1.50), perfluoropropane (237K; 1.26), perfluorobutane (271K; 1.14), perfluorocyclobutane (267K; 1.35), hexafluorosulphur (209K; 1.43) and mixtures thereof. Preferred due to availability and for environmental reasons are tetrafluoroethane, chlorodifluoroethane, heptafluoropropane, perfluoropropane, perfluorobutane, perfluorocyclobutane and chlorodifluoromethane.

As mentioned, component (b) contains one or more hydrocarbon compounds (b1) that have preferably from five to eight carbon atoms. Advantageously, for ease of handling within the process of this invention, the atmospheric boiling point of the hydrocarbon compound is from at least 283K and up to the temperature attained during the exothermic reaction of preparing the polyisocyanate-based foam. Preferably, the boiling point of the hydrocarbon is from 288K, and up to 393K, more preferably up to 373K. Suitable hydrocarbons include aromatic, alicyclic and especially aliphatic compounds. Exemplary of alicyclic hydrocarbons include cyclohexane and cyclopentane. Exemplary of the preferred aliphatic hydrocarbon compounds for use in this present invention include pentane, hexane, heptane, octane and isomers thereof. Particularly preferred due to availability are n-pentane, n-hexane, n-heptane and mixtures thereof, with n-pentane being especially preferred. Such hydrocarbons or mixture thereof are readily available commercially and frequently identified as petroleum ethers with a boiling range of, for example, 24 to 32°C, 40 to 65°C and 60 to 95°C. Hydrocarbon substances available from Exxon including products designated as NORPAR™ 5, NORPAR™ 6 and NORPAR™ 7 are also suitable for use in this invention. Hydrocarbon compounds containing one or more unsaturated carbon carbon bonds such as alkenes and especially cycloalkenes, for example. cyclopentene and cyclohexene are also suitable.

As mentioned, component (b2) is a polyfluorocarbon which preferably has a boiling point of from 298K and more preferably from 313K, and up to 373K. The polyfluorocarbon is characterized in that it is sparingly soluble or essentially insoluble in the polyisocyanate or isocyanate-reactive component used to prepare the foam. The extent of the insoluble characteristic can be conveniently expressed in terms of the ratio of Kelvin boiling point:molecular weight. Suitable polyfluorocarbons for use in this present invention as component (b2) may be characterized in that they have a boiling point: molecular weight ratio of 1.7 or less, preferably 1.4 or less, and more preferably 1.1 or less. As this number becomes smaller, the polyfluorocarbon is generally considered as being more insoluble in the components used to prepare polyurethane foam. A value greater than 1.7 is generally considered as indicating components which are of at least moderate solubility. Representative of suitable (b2) polyfluorocarbon compounds include aromatic aliphatic and alicyclic compounds and particularly polyfluoroalkanes including perfluoroalkanes and polyfluoroethers including perfluoroethers, or mixtures thereof.

Polyfluoroalkanes contemplated for use in this present invention generally meeting the above requirements include those represented by the following general empirical formula:

CₘHₙFₚ

wherein m is an integer from 3 to 15; n an integer from 0 to 3; and p an integer ranging in value from 2m-n to 2m-n+2. The integer (m) is preferably from 5 to 10, and more preferably from 5 to 8; and integer (n) is preferably 0 or 1. Compounds with fewer or greater numbers of carbon atoms generally do not meet the boiling point: molecular weight ratio as given for (b2).

Polyfluoroether compounds contemplated for use in this present invention generally meeting the above requirements include those represented by the following general empirical formula:

(CₐH_{b}F_{c})-0-(C_{d}HₑF_{f})

wherein a and d are both positive integers having a combined total of from 3 to 15, preferably from 3 to 10, and more preferably from 4 to 8; both b and e are positive integers having a combined total of from 0 to 3; and c is defined as being equivalent to 2a+1-b and f as 2d+1-e.

Exemplary of polyfluorocarbon compounds include perfluorocyclohexane (Kelvin boiling point: molecular weight ratio; 1.08), perfluoromethylcyclohexane (0.99), perfluorotoluene (1.59), perfluoropentane (1.05), perfluoro-n-pentane (0.98), perfluoro-n-hexane (0.976), perfluoro-2-methylpentane (0.97), perfluoro-3--methylpentane (0.97), perfluoro-2,3-dimethylbutane (0.98), perfluoro-n-heptane (0.91), perfluoro-n-octane (0.89); and hydrogen-containing analogues of the above containing a maximum of three hydrogen atoms and or mixtures thereof. Suitable commercially available polyfluoroalkanes and polyfluoroethers are sold by Rhone-Poulenc under the trademark FLUTEC™ and include products designated as FLUTEC™ PP50, FLUTEC™ PP1C, FLUTEC™ PP1, FLUTEC™ PP2 and FLUTEC™ PP3; by 3M under the trademark FLUORINERT™ and include products designated as FLUORINERT 72, FLUORINERT 77, FLUORINERT 84, FLUORINERT 104, FLUORINERT 75; and by Monteflos under the trademark GALDEN™ and include the product designated as GALDEN D/80.

Exemplary of preferred component (b) mixtures for use in the present invention are where component (b1) is one or more selected from the group consisting of pentane, hexane, heptane, octane and isomers thereof; and component(b2) is one or more selected from the group consisting of perfluoropentane, perfluorohexane, perfluoroheptane, perfluorooctane, there monohydrogen-containing equivalents.

In making fine celled polyisocyanate-based foams by the process of this invention, a polyisocyanate is intimately mixed under reactive conditions with at least one isocyanate-reactive compound in the presence of the blowing agent mixture of this invention. It is often convenient to preblend the blowing agent mixture of this invention with the isocyanate-reactive compound before contacting same with the polyisocyanate. It is however, possible to blend the polyisocyanate, isocyanate-reactive compound and blowing agent simultaneously in the production of foam, or alternative blend the blowing agent mixture with the polyisocyanate before contacting same with the isocyanate-reactive compound. It is advantageous to employ sufficient amounts of blowing agent to provide a polymer having an overall density of from 10 to 700, preferably from 10 to 300, more preferably from 10 to 100 kg/m3.

Isocyanate-reactive compounds which are useful in the preparation of polyisocyanate-based foam include those materials or mixtures generally having an average of two or more groups which contain an isocyanate-reactive hydrogen atom, such as are described in U.S. Patent No. 4,394,491. Preferred among such compounds are materials where the isocyanate-reactive hydrogen atom is associated with a hydroxyl, primary or secondary amine, carboxylic acid, or thiol groups. Polyols, i.e., compounds having from at least two hydroxyl groups per molecule, are especially preferred due to their desirable reactivity with polyisocyanates. Materials having only one isocyanate-reactive hydrogen atom such as, for example, a (polyether)monoalcohol may also be present in small amounts when preparing a polyisocyanate-based foam.

When preparing rigid polyurethane or polyisocyanurate foam, suitable isocyanate-reactive materials are those substances typically having an isocyanate-reactive hydrogen atom equivalent weight of from 50 to 700, preferably from 70 to 300 and more preferably from 70 to 150. Such isocyanate-reactive materials also advantageously contain at least 2, preferably from 3, and up to 16, preferably up to 8 isocyanate-reactive hydrogen atoms per molecule. Representative of such isocyanate-reactive materials include polyether polyols, polyester polyols, polyhydroxy-terminated acetal resins, hydroxyl-terminated amines and polyamines. Examples of these and other suitable isocyanate reactive materials are described more fully in U.S. Patent No. 4,394,491, particularly in columns 3 to 5 thereof. Most preferred for preparing rigid foams, on the basis of performance, availability and cost, is a polyol prepared by adding an alkylene oxide to an initiator having from 2 to 8, preferably 3 to 8 active hydrogen atoms. Exemplary of suitable commercially available polyols are those sold under the trademark VORANOL™ by The Dow Chemical Company and include products designated as VORANOL™ 202, VORANOL™ 360, VORANOL™ 370, VORANOL™ 446, VORANOL™ 490, VORANOL™ 575, VORANOL™ 800 and VORANOL™ 640. Other preferred polyols include alkylene oxide derivatives of Mannich condensates, as taught, for example, in U.S. Patent Nos. 3,297,597, 4,137,265 and 4,383,102; and aminoalkylpiperazine-initiated polyethers as described in U.S. Patent Nos. 4,704,410 and 4,704,411.

Polyisocyanates useful in making polyurethanes include aromatic, aliphatic and cycloaliphatic polyisocyanates and combinations thereof. Representative of these types are diisocyanates such as m- or p-phenylene diisocyanate, toluene-2,4--diisocyanate, toluene-2,6-diisocyanate, hexamethylene-1,6-diisocyanate, tetramethylene-1,4-diisocyanate, cyclohexane-1,4-diisocyanate, hexahydrotoluene diisocyanate (and isomers), naphthylene-1,5--diisocyanate, 1-methylphenyl-2,4-phenyldiisocyanate, diphenylmethane--diisocyanate, diphenylmethane-2,4'--diisocyanate, 4,4'-biphenylenediisocyanate, 3,3'- dimethoxy--biphenylenediisocyanate and 3,3'-dimethyldiphenylpropane--diisocyanate; triisocyanates such as toluene-2,4,6-triisocyanate and polyisocyanates such as 4,4'-dimethyldiphenylmethane--2,2',5',5'-tetraisocyanate and the diverse polymethylenepolyphenylpolyisocyanates. A crude polyisocyanate may also be used in the practice of this invention, such as the crude toluene diisocyanate obtained by the phosgenation of a mixture of toluene diamines or the crude diphenylmethane diisocyanate obtained by the phosgenation of crude diphenylmethanediamine. The preferred undistilled or crude polyisocyanates are disclosed in U.S. Patent 3,215,652. Especially preferred for use in this invention are methylene-bridged polyphenyl polyisocyanates, due to their ability to crosslink the polyurethane.

In the process of preparing the polyurethane and/or polyisocyanurate foam the isocyanate index, ratio of equivalents of isocyanate to equivalents of active hydrogen atoms, is advantageously from 0.7 to 5, preferably 0.8 to 4 and more preferably 0.9 to 1.5.

In addition to the foregoing critical components, optionally and advantageously certain other ingredients are present when preparing the polyisocyanate-based foam. Among these additional ingredients are water, catalysts, surfactants, flame retardants, preservatives, colorants, antioxidants, reinforcing agents and fillers.

Particularly, it has been found that when water is present the stability of the polyfluorocarbon (b2) component generally present as an emulsion in the isocyanate-reactive compound is enhanced as is the dimensional stability of the foam obtained from the process. Additionally, water acts as a blowing agent precursor providing carbon dioxide through reaction with isocyanate. Water advantageously is present in from at least 2.0 parts by weight per 100 parts by weight of total isocyanate-reactive compound. Preferably, the water is present in amounts of from 2.2, more preferably from 2.5 and most preferably from 2.7 and up to 10, more preferably up to 6 and most preferably up to 5 parts by weight.

When preparing polyurethane foam, it is generally highly preferred to employ a minor amount of a surfactant to stabilize the foaming reaction mixture until it cures. Such surfactants advantageously comprise a liquid or solid organosilicone surfactant. Other, less preferred surfactants include polyethylene glycol ethers of long chain alcohols, tertiary amine or alkanolamine salts of long chain alkyl acid sulfate esters, alkyl sulfonic esters and alkyl arylsulfonic acids. Suitable surfactants for use in this present invention include those described in U.S. Patent Nos. 4,529,743, 3,637,541 and DE 14 95 927. Such surfactants are employed in amounts sufficient to stabilize the foaming reaction mixture against collapse and the formation of large, uneven cells. The required amounts, should be established experimentally but, typically are from 0.5 to 5, and preferably from 1, and more preferably from 1.5 parts of the surfactant per 100 parts by weight polyol. If insufficient amounts of surfactant are present the occurrence of foam collapse and/or formation of large unevenly distributed and/or sized cells may be observed. Representative of commercially available surfactants for use in this present invention include products sold by Th.. Goldschmidt under the trademark TEGOSTAB and designated as TEGOSTAB B-1048, TEGOSTAB B-1049 and TEGOSTAB BF-2270.

One or more catalysts for promoting the reaction of polyol and water with the polyisocyanate are advantageously used. Any suitable urethane catalyst may be used, including tertiary amine compounds and organometallic compounds. Exemplary tertiary amine compounds include triethylenediamine, N-methyl morpholine, 3-methoxy-N-dimethylpropylamine, pentamethyldiethylenetriamine, N-cocomorpholine, 1-methyl-4-dimethylaminoethylpiperazine, tetramethylethylenediamine, N-ethyl morpholine, diethylethanolamine, N,N-dimethyl-N',N'-dimethyl isopropylpropylenediamine, N,N-diethyl-3--diethylaminopropylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-2-ethyl hexanoate, as well as other organometallic compounds such as are disclosed in U.S. Patent No. 2,846,408. A catalyst for the trimerization of polyisocyanates, such as an alkali metal alkoxide, alkali metal carboxylate or quaternary amine compound may also optionally be employed herein. Such catalysts are used in an amount which increases the rate of reaction of the polyisocyanate. Typically, depending on the relative activity of the catalyst they are used in amounts of from 0.01 to 3, and preferably from 0.001 to 2 parts of catalyst per 100 parts by weight of polyol.

In making a polyurethane foam, the polyol(s), polyisocyanate and other components are contacted, thoroughly mixed and permitted to expand and cure into a cellular polymer. The particular mixing apparatus is not critical, and various types of mixing head and spray apparatus are conveniently used. It is often convenient, but not necessary, to preblend certain of the raw materials prior to reacting the polyisocyanate and active hydrogen-containing components. For example, it is often useful to blend the polyol(s), blowing agent, surfactants, catalysts and other components except for polyisocyanates, and then contact this mixture with the polyisocyanate. Alternatively, all components can be introduced individually to the mixing zone where the polyisocyanate and polyol(s) are contacted. It is also possible to pre-react all or a portion of the polyol(s) with the polyisocyanate to form a prepolymer. Further, it is also possible to blend the isocyanate, blowing agent and other non isocyanate-reactive components and then contact this resulting mixture with a polyol.

The second aspect of this present invention relates to a polyisocyanate-based foam prepared in the presence of the above-described blowing agent mixture. The foam can be characterized in that it has a fine celled structure. By the term "fine" it is understood that the cells of the foam have an average cell diameter of typically 0.45 millimeters or less, preferably 0.30 millimeters or less, and more preferably 0.25 millimeters or less. Cell diameters can readily be determined using available techniques such as image analysis in combination with an optical microscope.

Additionally, when initially prepared, the foam may be characterized in that it contains within its cells, based on amounts of blowing agent present in the foaming process, a gas mixture comprising:
(i) from 5 to 90 mole percent, based on components (i) and (ii), of carbon dioxide; and
(ii) from 95 to 10 mole percent, based on components (i) and (ii), of component (ii) of a physical blowing agent that comprises:
   (a) from 2 to 70 mole percent based on total moles of components (a) and (b) present, of a halocarbon substance, different from (b2), which has a boiling point of from 200K and up to 283K at 1.113 bar (760 mm Hg); and
   (b) from 98 to 30 mole percent of a mixture which consists of
      (b1) a hydrocarbon component that contains four or more carbon atoms, and
      (b2) a polyfluorocarbon component which has a Kelvin boiling point of from 283K to 393K at 1.113 bar (760 mm Hg) and a ratio of Kelvin boiling point to molecular weight of less than or equal to 1.7 and wherein the mole ratio of (b1):(b2) is from 5 to 95:95 to 5.

Component (i) of the cell gas mixture, carbon dioxide, is preferably present in an amount of from 15, more preferably from 30, and most preferably from 40, and up to 80, more preferably up to 70 mole percent based on the total moles of carbon dioxide and the blowing agent mixture (ii).

The carbon dioxide content of the cell is principally obtained through the presence of water in the process of preparing the foam and its reaction with the isocyanate to generate "nascent" carbon dioxide. However, it is aiso possible to introduce the carbon dioxide directly by entrainment of carbon dioxide gas into the reaction components prior to or during the foaming process or to use alternative chemical sources of carbon dioxide compatible with the polymerizing reaction. Such alternative chemical sources of carbon dioxide include, for example, decomposition of amine/carbon dioxide adducts or generation through the carbodiimidization reaction of isocyanates.

The third aspect of this invention relates to a composition comprising a blend of an isocyanate-reactive material, water in an amount of from 2 to 10 parts per 100 parts by weight of isocyanate-reactive material and a minor amount of a physical blowing agent mixture as described hereinabove. By "minor amount" it is understood that the composition contains a sufficient amount of the blowing agent so that when the composition is used in the preparation of polyisocyanate-based foam, foam of the desired density is obtained. The amount of blowing agent present is from 1 to 50, preferably from 5 to 30, and more preferably from 10 to 30 parts by weight per 100 parts by weight of the isocyanate-reactive material. Preferably, the water is present in amounts of from 2.2, more preferably from 2.5 and most preferably from 2.7 and preferably up to 6 and more preferably up to 5 parts by weight.

The polyurethane foam prepared by the process of this invention using the above described blowing agent of this invention is useful in a wide range of applications. Particularly, when the foam prepared according to this invention is a rigid polyurethane it is of value for applications such as spray insulation, appliance foam, rigid insulating boardstock, and laminates.

The following examples are given to illustrate the invention and are not intended to limit the scope thereof. Unless stated otherwise, all parts and percentages are given by weight. A standard polyol formulation is used in the preparation of foams with various blowing agent mixtures according to the invention and contains.

| | |
|---|---|
| 56.7 parts | sucrose/glycerine-initiated oxypropylene polyol, OH No. 400 |
| 9.0 parts | glycerine-PO polyol, OH No 645 |
| 6.8 parts | ethylenediamine-PO polyol, OH No 640 |
| 20.6 parts | polyoxypropylene glycol, OH No 56 |
| 3.15 parts | water |
| 0.8 part | N,N-dimethylaminocyclohexane |
| 0.9 part | CURITHANE 206, a polyisocyanurate-promoting catalyst available from The Dow Chemical Company |
| 2.0 parts | Tegostab B-1048, a silicone surfactant available from Th. Goldschmidt Ag. |
| Blowing Agent | to provide for a foam having a free rise density of from 20 to 21 kilograms per cubic meter. |

Handmix foams are prepared by reacting the above polyol formulation with a crude polymeric polyisocyanate, designated as VORANATE™ 227 and available from The Dow Chemical Company, at a reaction index of 1.05. The polyol formulation and polyisocyanate are intimately mixed for about 10 seconds using a mixer operating at 3000 rpm, then resulting mixture is poured into a container and allowed to react and provide the final polyurethane foam.

Thermal conductivity properties of the foams so obtained are measured at 0 days after preparation in the parallel-to-rise direction using samples having dimensions of approximately 20×20×3 cm. The conductivity is measured using an Anacon Model 88 Thermal Conductivity Analyzer having mean plate temperatures of 10.2°C and 37.8°C. Lower values (mW/M.K) indicate better thermal insulative properties. Aged thermal conductivities as reported are obtained by measuring the thermal conductivity of the same foam sample after storage at ambient temperatures and conditions for 90 days, or other period of time as may be stated.

The average foam cell diameter is determined from a thin section of foam using a polarized-light optical microscope together with a Quantimet 520 Image Analysis system. The accuracy of the measurement is considered to be ±0.02mm.

The composition of the cell gas mixture as given is that which can be anticipated if there is a full retention of all blowing agents and gases within the initial foam based on types and amounts components present in the reacting mixture.

### Example 1 (Comparative)

Polyurethane foam is prepared using a foaming system wherein component (a) is dichlorofluoroethane b.p. 305K (b.p.:m.wt., 2.61), component (b1) is n-hexane; component (b2) a polyfluoroalkane (C₆F₁₄) (b.p.:m.wt. 0.97). The standard polyol formulation described is modified to contain water in total amounts of from 0.61, 1.22, 1.82 and 3.04 parts so providing for foam having a calculated carbon dioxide cell gas content, based on amounts of water and physical blowing agent present, of respectively, 10, 20, 30, and 50 mole percent. Properties of the resulting foams are given in Table 1.

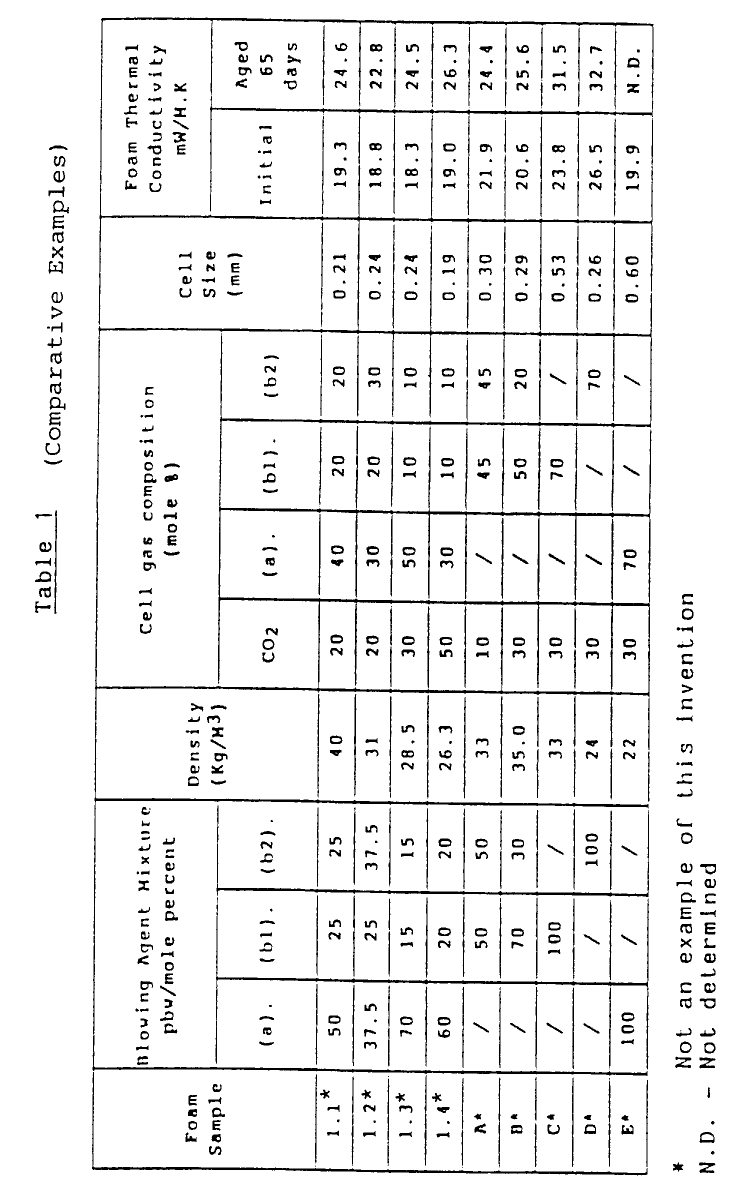

### Example 2

Handmix polyurethane foams having a free-rise density of approximately 21 kilograms per cubic meter and when molded of approximately 30 kilograms per cubic meter are prepared according to this invention using the polyol formulation given below

| | |
|---|---|
| 95 parts | polyoxypropylene-oxyethylene(50:50) adduct of a phenol/formaldehyde condensate having hydroxyl number of 224 |
| 5 parts | polyoxypropylene glycol, OH No 56 |
| 10 parts | Tegostab B-1048, a silicone surfactant available from Th. Goldschmidt Ag. |
| 0.6 part | N,N-dimethylaminocyclohexane |
| 0.3 part | pentamethyldiethylenediamine |
| 2.45 parts | water |
| 94.4 parts | VORANATE 220 a crude polymeric polyisocyanate available from The Dow Chemical Company. |

The physical blowing agent mixture employed contains component (a) at 33 mole percent as identified in Table 2; Component (b1) (33 mole percent of the total blowing agent mixture) of the mixture is n-hexane; Component (b2) (33 mole percent) is a product designated as FLUTEC™ PP1C sold by Rhone-Poulenc and believed to be perfluoromethylcyclopentane (b.p. 321K, b.p.:m.wt.) 1.07.

This example illustrates the advantage with respect to cell size reduction and reduced foam thermal conductivity to be obtained by selecting blowing agent systems wherein component (a) has a boiling point of less than 283K. Particularly of note is the compressive strength performance trend observed for Examples 2.3 to 2.5. Normally as the cell size of foam is reduced, a corresponding reduction in compressive strength is observed. Surprisingly it is observed with these examples, that as cell size is further reduced there is an unexpected increase in foam compressive strengths.

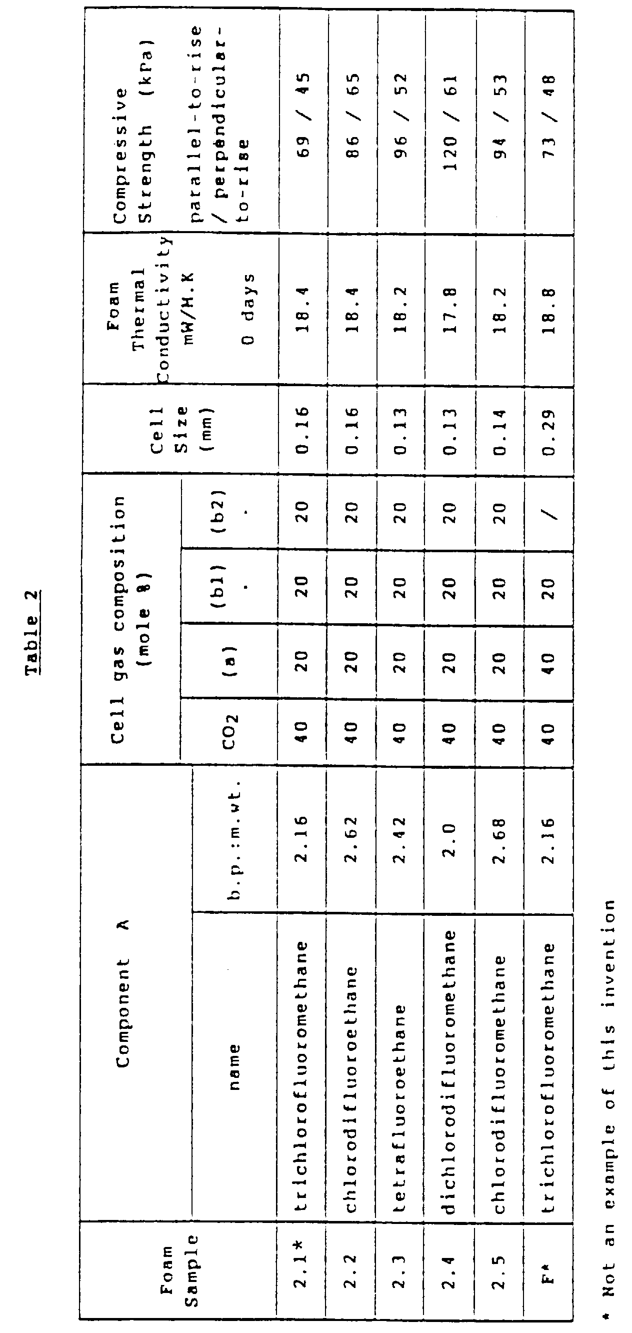

### Example 3

In this example a polyurethane foam is from the standard formulation, but modified to additionally contain 2 parts by weight of a surfactant, TEGOSTAB B-2219 available from Th. Goldschmidt Ag. The foam is prepared using a low pressure mixing and dispensing unit in the presence of a physical blowing agent mixture which contains as Component (a) (2 mole percent) heptafluoropropane (b.p. 256K; b.p.:m.wt., 1.5); as 98 mole percent component (b) containing n-pentane (b1) and a product (b2) designated as FLUTEC PP50 sold by Rhone--Poulenc and believed to be perfluoro-n-pentane(b.p. 302K; b.p.:m.wt., 1.05). Components (b1) and (b2) are in a 50:50 mole ratio. The properties of so obtained foam, having a cell gas composition of carbon dioxide 50 percent; Component (a) 1 percent; Component (b1) 24 percent; Component (b2) 24 percent, are given in Table 3.

**Table 3**

| Foam Property | Foam Sample 3.1 | Foam Sample 3.2 | Foam Sample 3.3 |
|---|---|---|---|
| Density (Kg/m³) | 21① | 30② | 35② |
| Compressive Strength (kPa) | | | |
| parallel-to-rise | 87 | 99 | 107 |
| perpendicular-to-rise | 39 | 69 | 82 |
| Foam Thermal Conductivity | | | |
| (mW/M.K) 0 day | / | 18.6 | 18.7 |
| 12 days | 20.4 | 20.1 | 20.5 |
| Cell Size (mm) | 0.13 | 0.13 | 0.12 |

| | | | |
|---|---|---|---|
| ① - free rise density | | | |
| ② - molded density | | | |

Comparing the data presented for Example 3 to that of the preceding examples clearly shows the benefits to be obtained by using, in relative small amounts, a component (a) which has a boiling point of less than 283K and a boiling point:molecular weight ratio of less than 1.7.

In this example, particularly of note is the exceptionally low thermal conductivity observed for the foam wherein about 75 mole percent of the total cell gas composition comprises carbon dioxide and pentane which both have relatively high gas thermal conductivities, 15 to 16 mW/M.K.

## Claims

1. A process for preparing a fine, closed-cell, polyisocyanate-based foam by reacting a polyisocyanate with an isocyanate reactive material in the presence of water and a physical blowing agent which comprises:
(a) from 2 to 70 mole percent based on total moles of components (a) and (b) present, of a halocarbon substance, different from (b2), which has a boiling point of from 200K and up to 283K at 1.113 bar (760 mm Hg); and
(b) from 98 to 30 mole percent of a mixture which consists of
(b1) a hydrocarbon component that contains four or more carbon atoms, and
(b2) a polyfluorocarbon component which has a Kelvin boiling point of from 283K to 393K at 1.113 bar (760 mm Hg) and a ratio of Kelvin boiling point to molecular weight of less than or equal to 1.7 and wherein the mole ratio of (b1):(b2) is from 5 to 95: 95 to 5.

2. A process as claimed in Claim 1 wherein component (a) is present in from 10 to 40 mole percent and component (b) in from 90 to 60 mole percent.

3. A process as claimed in Claim 1 wherein the mole ratio (b1):(b2) is from 40 to 90: 60 to 10.

4. A process as claimed in Claim 1 wherein the physical blowing agent comprises as component (a) a chlorocarbon, a chlorofluorocarbon, a fluorocarbon or mixtures thereof; (b1) is pentane, hexane, heptane, octane or mixtures thereof; and (b2) is a polyfluorocarbon compound which is a polyfluoroalkane represented by the formula
CₘHₙFₚ
wherein m is an integer from 3 to 15; n an integer from 0 to 3; and p an integer ranging in value from 2m-n to 2m-n+2, or a polyfluoroether compound represented by the formula
(CₐH_{b}F_{c})-O-(C_{d}HₑF_{f})
wherein a and d are both positive integers having a combined total of from 3 to 15, both b and e are positive integers having a combined total of from 0 to 3; and c is an integer defined as being equivalent to 2a+1-b and f an integer defined as being equivalent to 2d+1-e.

5. A process as claimed in claims 1 to 4 wherein component (a) is tetrafluoroethane, chlorodifluoroethane, chlorodifluoromethane, dichlorodifluoromethane, heptafluoropropane, or mixtures thereof.

6. A process as claimed in Claims 1 to 5 wherein component (b2) is a polyfluoroalkane compound and is perfluoropentane, perfluorohexane, perfluoroheptane, perfluorooctane and there hydrogen-containing analogues of the above containing a maximum of three hydrogen atoms and or mixtures thereof.

7. A process as claimed in Claims 1 to 6 wherein water is present in from at least 2 and up to 10 parts by weight per 100 parts isocyanate reactive material.

8. A fine, closed-cell polisocyanate-based foam prepared according to the process as claimed in claims 1 to 7 having an average density of from 10 to 100 kg/m³, a mean cell diameter of 0.45 mm or less and within its cells a gas mixture which contains:
(i) from 5 to 90 mole percent, based on components (i) and (ii), of carbon dioxide; and
(ii) from 95 to 10 mole percent, based on components (i) and (ii), of component (ii) of a physical blowing agent that comprises:
(a) from 2 to 70 mole percent based on total moles of components (a) and (b) present, of a halocarbon substance, different from (b2), which has a boiling point of from 200K and up to 283K at 1.113 bar (760 mm Hg); and
(b) from 98 to 30 mole percent of a mixture which consists of
(b1) a hydrocarbon component that contains four or more carbon atoms, and
(b2) a polyfluorocarbon component which has a Kelvin boiling point of from 283K to 393K at 1.113 bar (760 mm Hg) and a ratio of Kelvin boiling point to molecular weight of less than or equal to 1.7 and wherein the mole ratio of (b1):(b2) is from 5 to 95:95 to 5.

9. A composition comprising an isocyanate-reactive material, water in from 2 to 10 parts per 100 parts by weight isocyanate reactive material and a physical blowing agent in from 1 to 50 parts per 100 parts by weight isocyanate reactive material characterized in that the physical blowing agent comprises:
(a) from 2 to 70 mole percent based on total moles of components (a) and (b) present, of a halocarbon substance, different from (b2), which has a boiling point of from 200K and up to 283K at 1.113 bar (760 mm Hg); and
(b) from 98 to 30 mole percent of a mixture which consists of
(b1) a hydrocarbon component that contains four or more carbon atoms, and
(b2) a polyfluorocarbon component which has a Kelvin boiling point of from 283K to 393K at 1.113 bar (760 mm Hg) and a ratio of Kelvin boiling point to molecular weight of less than or equal to 1.7 and wherein the mole ratio of (b1):(b2) is from 5 to 95:95 to 5.

## Patentansprüche

1. Verfahren zur Herstellung eines feinen, geschlossenzelligen Schaums auf Polyisocyanatbasis durch Umsetzen eines Polyisocyanats mit einem Isocyanat-reaktiven Material in Gegenwart von Wasser und einem physikalischen Treibmittel, welches umfaßt:
(a) von 2 bis 70 Molprozent, bezogen auf die vorliegenden Gesamtmole der Bestandteile (a) und (b), einer von (b2) verschiedenen Halogenkohlenstoffsubstanz, welche einen Kochpunkt von 200 K und bis 283 K bei 1,113 bar (760 mm Hg) aufweist, und
(b) von 98 bis 30 Molprozent eines Gemisches, welches besteht aus
(b1) einem Kohlenwasserstoff-Bestandteil, der vier oder mehr Kohlenstoffatome enthält, und
(b2) einem Polyfluorkohlenstoff-Bestandteil, welcher einen Kelvin-Kochpunkt von 283 K bis 393 K bei 1,113 bar (760 mm Hg) und ein Verhältnis von Kelvin-Kochpunkt zu Molekulargewicht von weniger als oder gleich 1,7 aufweist und worin das Molverhältnis von (b1):(b2) von 5 bis 95:95 bis 5 beträgt.

2. Verfahren nach Anspruch 1, worin der Bestandteil (a) mit von 10 bis 40 Molprozent und der Bestandteil (b) von mit 90 bis 60 Molprozent vorliegt.

3. Verfahren nach Anspruch 1, worin das Molverhältnis (b1):(b2) von 40 bis 90:60 bis 10 beträgt.

4. Verfahren nach Anspruch 1, worin das physikalische Treibmittel als Bestandteil (a) einen Chlorkohlenstoff, einen Chlorfluorkohlenstoff, einen Fluorkohlenstoff oder Gemische davon umfaßt, (b1) Pentan, Hexan, Heptan, Octan oder Gemische davon darstellt und (b2) eine Polyfluorkohlenstoffverbindung ist, welche ein Polyfluoralkan ist, welches durch die Formel
CₘHₙFₚ
dargestellt wird, worin m eine ganze Zahl von 3 bis 15, n eine ganze Zahl von 0 bis 3 und p eine ganze Zahl im Wertebereich von 2m-n bis 2m-n+2 ist oder eine Polyfluoretherverbindung, welche durch die Formel
(CₐH_{b}F_{c})-O-(C_{d}HₑF_{f})
dargestellt wird, worin a und d beide positive ganze Zahlen sind, welche zusammengenommen einen Wert von 3 bis 15 aufweisen, sowohl b als auch e positive ganze Zahlen sind, welche zusammengenommen einen Wert von 0 bis 3 aufweisen und c eine ganze Zahl ist, die als äquivalent zu 2a+1-b definiert ist und f eine ganze Zahl ist, die als äquivalent zu 2d+1-e definiert ist.

5. Verfahren nach einem der Ansprüche 1 bis 4, worin der Bestandteil (a) Tetrafluorethan, Chlordifluorethan, Chlordifluormethan, Dichlordifluormethan, Heptafluorpropan oder Gemische davon ist.

6. Verfahren nach einem der Ansprüche 1 bis 5, worin der Bestandteil (b2) eine Polyfluoralkanverbindung ist und Perfluorpentan, Perfluorhexan, Perfluorheptan, Perfluoroctan und deren Wasserstoff enthaltende Analoga, welche maximal drei Wasserstoffatome enthalten und/oder Gemische davon ist. .

7. Verfahren nach einem der Ansprüche 1 bis 6, worin Wasser von mindestens 2 und bis zu 10 Gewichtsteilen pro 100 Teile des Isocyanat-reaktiven Materials vorliegt.

8. Feiner, geschlossenzelliger Schaum auf Polyisocyanatbasis, hergestellt durch ein Verfahren nach einem der Ansprüche 1 bis 7, welcher eine durchschnittliche Dichte von 10 bis 100 kg/m³, einen mittleren Zelldurchmesser von 0,45 mm oder weniger und in seinen Zellen ein Gasgemisch aufweist, welches enthält:
(i) von 5 bis 90 Molprozent Kohlendioxid, bezogen auf die Bestandteile (i) und (ii), und
(ii) von 95 bis 10 Molprozent eines physikalischen Treibmittel-Bestandteils (ii), bezogen auf die Bestandteile (i) und (ii), welcher umfaßt:
(a) von 2 bis 70 Molprozent, bezogen auf die vorliegenden Gesamtmole der Bestandteile (a) und (b), einer von (b2) verschiedenen Halogenkohlenstoffsubstanz, welche einen Kochpunkt von 200 K und bis 283 K bei 1,113 bar (760 mm Hg) aufweist und
(b) von 98 bis 30 Molprozent eines Gemisches, welches besteht aus
(b1) einem Kohlenwasserstoff-Bestandteil, welcher vier oder mehr Kohlenstoffatome enthält und
(b2) einem Polyfluorkohlenstoff-Bestandteil, welcher einen Kelvin-Kochpunkt von 283 K bis 393 K bei 1,113 bar (760 mm Hg) und ein Verhältnis von Kelvin-Kochpunkt zu Molekulargewicht von weniger als oder gleich 1,7 aufweist und worin das Molverhältnis von (b1):(b2) von 5 bis 95:95 bis 5 beträgt.

9. Zusammensetzung, umfassend ein Isocyanat-reaktives Material, Wasser von 2 bis 10 Teilen pro 100 Gewichtsteile des Isocyanat-reaktiven Materials und ein physikalisches Treibmittel von 1 bis 50 Teilen pro 100 Gewichtsteile des Isocyanat-reaktiven Materials, dadurch gekennzeichnet,
daß das physikalische Treibmittel umfaßt:
(a) von 2 bis 70 Molprozent, bezogen auf die vorliegenden Gesamtmole der Bestandteile (a) und (b), einer von (b2) verschiedenen Halogenkohlenstoffsubstanz, welche einen Kochpunkt von 200 K und bis 283 K bei 1,113 bar (760 mm Hg) aufweist, und
(b) von 98 bis 30 Molprozent eines Gemisches, welches besteht aus
(b1) einem Kohlenwasserstoff-Bestandteil, der vier oder mehr Kohlenstoffatome enthält und
(b2) einen Polyfluorkohlenstoff-Bestandteil, welcher einen Kelvin-Kochpunkt von 283 K bis 393 K bei 1,113 bar (760 mm Hg) und ein Verhältnis von Kelvin-Kochpunkt zu Molekulargewicht von weniger als oder gleich 1,7 aufweist und worin das Molverhältnis von (b1):(b2) von 5 bis 95:95 bis 5 beträgt.

## Revendications

1. Procédé pour préparer une mousse fine à base de polyisocyanate, à alvéoles fermées, en faisant réagir un polyisocyanate avec un matériau réactif avec les isocyanates en présence d'eau et d'un agent d'expansion physique qui comprend :
(a) de 2 à 70 % en moles, par rapport au nombre total de moles des composants (a) et (b) présents, d'une substance halogénocarbonée différente de (b2), qui présente un point d'ébullition compris entre 200 K et 283 K sous 1,113 bar (760 mm Hg) ; et
(b) de 98 à 30 % en moles d'un mélange qui consiste en :
(b1) un composant hydrocarboné qui contient 4 ou plus de 4 atomes de carbone, et
(b2) un composant polyfluorocarboné qui présente un point d'ébullition exprimé en Kelvin, compris entre 283 K et 393 K sous 1,113 bar (760 mm Hg) et un rapport du point d'ébullition exprimé en Kelvin à la masse moléculaire inférieur ou égal à 1,7, et
dans lequel le rapport molaire (b1):(b2) est compris entre 5:95 et 95:5.

2. Procédé conforme à la revendication 1, dans lequel le composant (a) est présent en une proportion de 10 à 40 % en moles et le composant (b) est présent en une proportion de 90 à 60 % en moles.

3. Procédé conforme à la revendication 1, dans lequel le rapport molaire (bl):(b2) est compris entre 40:60 et 90:10.

4. Procédé conforme à la revendication 1, dans lequel l'agent d'expansion physique comprend, comme composant (a), un chlorocarbone, un chlorofluorocarbone, un fluorocarbone ou leurs mélanges ; (b1) est le pentane, l'hexane, l'heptane, l'octane ou leurs mélange ; et (b2) est un composé polyfluorocarboné qui est un polyfluoroalcane répondant à la formule :
CₘHₙFₚ
dans laquelle m représente un nombre entier de 3 à 15 ; n est un nombre entier de 0 à 3 ; et p représente un nombre entier se situant dans l'intervalle allant de 2m-n à 2m-n+2, ou un polyfluoroéther répondant à la formule :
(CₐH_{b}F_{c})-O-(C_{d}HₑF_{f})
dans laquelle a et d représentent tous les deux des nombres entiers positifs dont la somme vaut de 3 à 15, b et e représentent tous les deux des nombres entiers positifs dont la somme vaut de 0 à 3 ; et c représente un nombre entier défini comme étant équivalent à 2a+1-b ; et f représente un nombre entier défini comme étant équivalent à 2d+1-e.

5. Procédé conforme aux revendications 1 à 4, dans lequel le composant (a) est le tétrafluoroéthane, le chlorodifluoroéthane, le chlorodifluorométhane, le dichlorodifluorométhane, l'heptafluoropropane ou leurs mélanges.

6. Procédé conforme aux revendications 1 à 5, dans lequel le composant (b2) est un polyfluoroalcane, et le perfluoropentane, le perfluorohexane, le perfluoroheptane, le perfluoro-octane et des analogues des composés précédents hydrogénés contenant un nombre maximum de trois atomes d'hydrogène ou leurs mélanges.

7. Procédé conforme aux revendications 1 à 6, dans lequel l'eau est présente en une quantité d'au moins 2 jusqu'à 10 parties en poids pour 100 parties de matériau réactif avec les isocyanates.

8. Mousse fine à base de polyisocyanate à alvéoles fermées préparée selon le procédé conforme aux revendications 1 à 7, présentant une masse volumique moyenne de 10 à 100 kg/m³, un diamètre moyen d'alvéole de 0,45 mm ou moins, et au sein de ses alvéoles, un mélange de gaz qui contient :
(i) de 5 à 90 % en moles, par rapport aux composants (i) et (ii), de dioxyde de carbone ; et
(ii) de 95 à 10 % en moles, par rapport aux composants (i) et (ii), de composant (ii) d'un agent d'expansion physique qui comprend :
(a) de 2 à 70 % en moles, par rapport au nombre total de moles des composants (a) et (b) présents, d'une substance halogénocarbonée différente de (b2), qui présente un point d'ébullition compris entre 200 K et 283 K sous 1,113 bar (760 mm Hg), et
(b) de 98 à 30 % en moles d'un mélange qui consiste en :
(b1) un composant hydrocarboné qui contient 4 ou plus de 4 atomes de carbone, et
(b2) un composant polyfluorocarboné qui présente un point d'ébullition exprimé en Kelvin, compris entre 283 K et 393 K sous 1,113 bar (760 mm Hg) et un rapport du point d'ébullition exprimé en Kelvin à la masse moléculaire inférieur ou égal à 1,7, et
dans lequel le rapport molaire (b1):(b2) est compris entre 5:95 et 95:5.

9. Composition comprenant un matériau réactif avec les isocyanates, de l'eau en une quantité de 2 à 10 parties pour 100 parties en poids de matériau réactif avec les isocyanates et un agent d'expansion physique en une quantité de 1 à 50 parties pour 100 parties en poids de matériau réactif avec les isocyanates, caractérisée en ce que l'agent d'expansion physique comprend :
(a) de 2 à 70 % en moles, par rapport au nombre total de moles des composants (a) et (b) présents, d'une substance halogénocarbonée différente de (b2), qui présente un point d'ébullition de 200 à 283 K sous 1,113 bar (760 mm Hg) ; et
(b) de 98 à 30 % en moles d'un mélange qui consiste en :
(b1) un composant hydrocarboné qui contient 4 ou plus de 4 atomes de carbones, et
(b2) un composant polyfluorocarboné qui présente un point d'ébullition exprimé en Kelvin, de 283 K à 393 K sous 1,113 bar (760 mm Hg) et un rapport du point d'ébullition exprimé en Kelvin à la masse moléculaire inférieur ou égal à 1,7, et
dans lequel le rapport molaire (b1):(b2) est compris entre 5:95 et 95:5.
